# EUROPÄISCHE PATENTSCHRIFT

(11) **EP 2 183 314 B1**
(45) Veröffentlichungstag und Bekanntmachung des Hinweises auf die Patenterteilung: **28.12.2011**
(21) Anmeldenummer: 08784803.2
(22) Anmeldetag: 16.07.2008
(51) Int. Cl.: C08K 5/5317, C08K 5/3492

(54) **PHOSPHORHALTIGE TRIAZIN-VERBINDUNGEN ALS FLAMMSCHUTZMITTEL**
TRIAZINE COMPOUNDS CONTAINING PHOSPHOROUS AS FLAME RETARDANTS
COMPOSÉS TRIAZINE PHOSPHORÉS EN TANT QUE PRODUITS IGNIFUGES

(30) Priorität: 01.08.2007 DE 102007036465
(43) Veröffentlichungstag der Anmeldung: 12.05.2010
(60) Teilanmeldung: 11151581.3
(73) Patentinhaber: CATENA Additives GmbH & Co. KG, 64665 Alsbach-Hähnlein (DE)
(72) Erfinder: WEHNER, Wolfgang, 64673 Zwingenberg (DE); DAVE, Trupti, 64673 Zwingenberg (DE)
(74) Vertreter: Büchel, Edwin
(86) Internationale Anmeldenummer: PCT/EP2008/005795
(87) Internationale Veröffentlichungsnummer: WO 2009/015772

(56) Entgegenhaltungen:
- EP-A- 0 393 421
- EP-A1- 1 116 773
- EP-A2- 1 095 975
- WO-A-2006/092363
- GB-A- 1 386 746

## Beschreibung

Die vorliegende Erfindung betrifft phosphorhaltige Triazin-Verbindungen, deren Verwendung als Flammschutzmittel und Polymere enthaltend die Verbindungen.

Metallphosphonate sind für sich oder in Kombination mit anderen Komponenten für eine große Anzahl von thermoplastischen Polymeren bekannt.

Stickstoffhaltige Flammschutzmittel, insbesondere auf Melamin-Basis sind seit langem bekannt und z.T. auch kommerziell erhältlich. Einige dieser Melamin-Verbindungen enthalten außerdem Phosphor.

In US-A 5 684 071 sind Melamin-Salze von Nitrilo(amino)trimethanphosphonsäure (NTMPA) als Flammschutzmittel allgemein beschrieben. Trimelamin- und Hexamelamin-NTMPA-Salz sind beschrieben in EP-A 1 116 773. In EP-A 1 116 772 hingegen werden Trimagnesium-Trikalzium- und Trizink-nitrilo(amino)trimethanphosphonat als Flammschutzmittelkomponenten beschrieben. EP-A 0 393 421 beschreibt wärmebeständige Schaumstoffe, welche durch Erhitzen von Metallphosphonaten oder Metallphosphonat-Vorläufern auf Temperaturen über 200 °C erhältlich sind.

Trotz der zahlreichen im Stand der Technik bekannten Flammschutzmittel besteht weiterhin ein Bedarf an Flammschutzmitteln mit optimierten Eigenschaften und verbesserter Umweltverträglichkeit.

Eine Aufgabe der vorliegenden Erfindung liegt somit in der Bereitstellung solcher Flammschutzmittel.

Die Aufgabe wird gelöst durch eine Verbindung der Formel **(III-1)** oder der Formel **(III-2)**

[(A-H)⁺]ₘ (M^{m+}(HPO₄²⁻)ₘ] **(III-1)**

[(A-H)⁺]ₘ [M^{m+}(P₂O₇⁴⁻)_{m/2}] **(III-2)**

wobei
**(A-H)**⁺ ein Rest der Formel (IV) 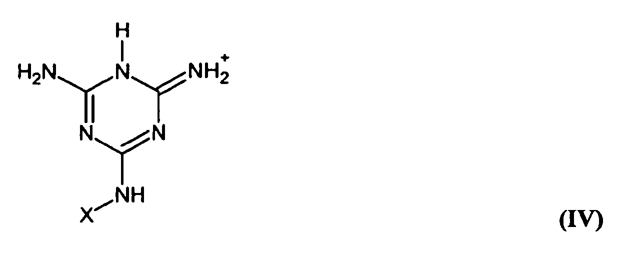 ist, in der **X** H, CN, C(NH)NH₂, C(O)NH₂, C(NH)NHCN ist oder dessen Kondensationsprodukt;
jedes **M** unabhängig voneinander Ca, Mg, Zn oder A1 ist;
**m** 2 oder 3 ist.

Bei Verbindungen der Formel (III) tritt ein Rest [(A-H)⁺] auf, der der Formel (IV) entspricht und ionischer Natur ist. Die deprotonierte Grundform entspricht für X = H Melamin. Die Reste werden entsprechend ihrer Grundformen in Verbindungen der Formel (III) eingebracht. Hierbei können diese selbst oder Kondensationsprodukte dieser unter Ammoniak-Abspaltung eingesetzt werden. Im Fall des Melamins sind diese beispielsweise Melam, Melem oder Melon. Bevorzugt ist X = H.

Verbindungen der Formel (III) enthalten Metallionen, die vorzugsweise Mg oder A1 sind.

Bei den oben dargestellten chemischen Formeln handelt es sich um Grenzformeln, welche die Reste in ionischem Zustand darstellen. Dies muss jedoch nicht der tatsächlichen Ladungsverteilung entsprechen. Darüber hinaus können auch tautomere Formen der oben dargestellten Strukturen auftreten und werden im Rahmen der vorliegenden Erfindung mit umfasst.

Beispiele für Verbindungen der Formel **(III)** sind folgende Verbindungen:

[(Mel-H)⁺]₂ [Mg(HPO₄)₂]²⁻ (59)

[(Mel-H)⁺]₂ [Ca(HP0₄)₂]²⁻ (60)

[(Mel-H)⁺]₂ [Zn(HPO₄)₂]²⁻ (61)

[(Mel-H)⁺]₃ [Al(HPO₄)₃]³⁻ (62)

[(Mel-H)⁺]₂ [MgP₂O₇]²⁻ (63)

[(Mel-H)⁺]₂ [CaP₂O₇]²⁻ (64)

[(Mel-H)⁺]₂ [ZnP₂O₇]²⁻ (65)

[(Mel-H)⁺]₃ [Al(P₂O₇)_{3/2}]³⁻ (66)

Bevorzugt sind: 59, 62, 63 und 66.

Die Verbindungen 59 bis 66 (Kategorie b) repräsentieren Hydrogenphosphato- oder Pyrophosphato-Metallate mit Komplex-Anionen, die ein vier- oder sechsbindiges Metallatom (Mg, Ca, Zn, Al) als Koordinationszentrum mit zweizähnigem Hydrogenphosphat- oder Pyrophosphat-Liganden aufweisen.

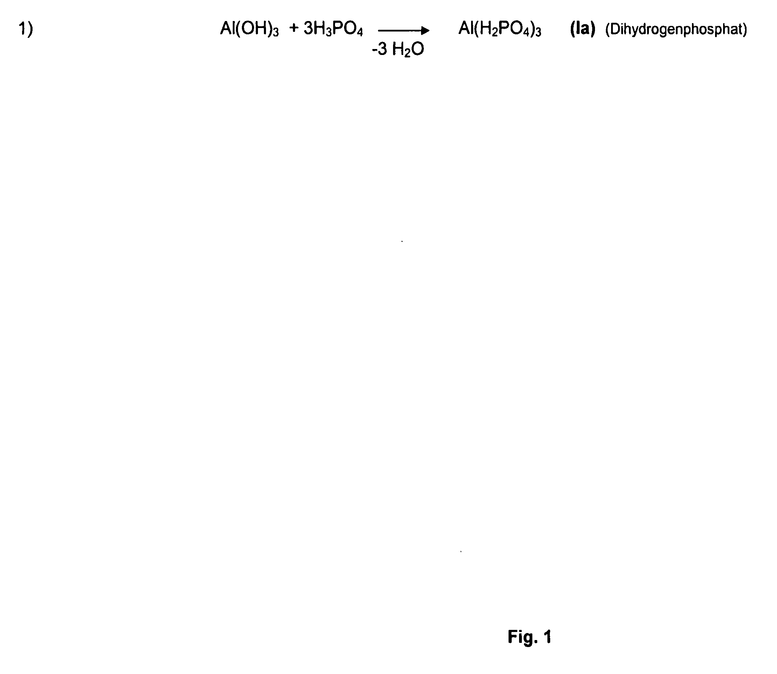

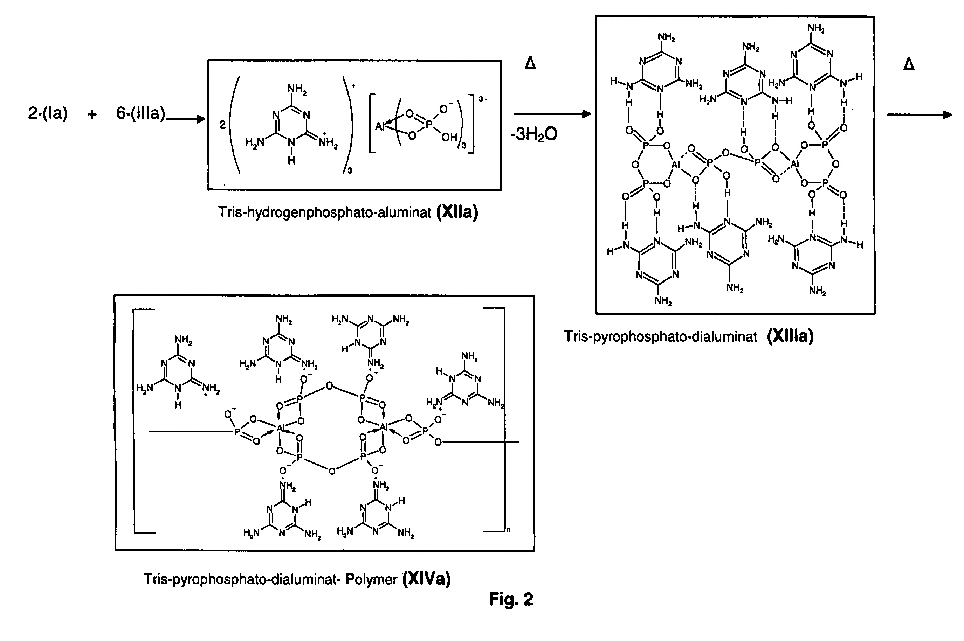

Die Synthese der Verbindungen nach Kategorie b) erfolgt gemäß Fig. 1 und 2.

Gemäß Beispiel 1 wird mit H₃PO₄ zur wäßrigen Mt(H₂PO₄ₕ oder ₃ -Lösung umgesetzt und diese anschließend mit festem Melamin **(IIIa)** homogenisiert. Alternativ kann die wäßrige Lösung auf Melamin aufgesprüht werden, wobei das Monomer **(XIIa)** entsteht - s. Beispiel 6.

Durch mehrstündiges Tempern bei 240 °C werden oligomere oder polymere Pyrophosphatodialuminate **(XIIIa** und **XIVa)** erhalten.

Bevorzugt wird ein Sprühverfahren.

Die erfindungsgemäßen Flammschutzmittel sind bestens geeignet, synthetischen, insbesondere thermoplastischen Polymeren, Flammschutzeigenschaften zu verleihen.

Ein Gegenstand der vorliegenden Erfindung ist die Verwendung einer erfindungsgemäßen Verbindung als Flammschutzmittel in einem Polymer, vorzugsweise einem Thermoplast, insbesondere einem Polyamid, Polyurethan, Polystyrol, Polyolefin oder Polyester oder einem Duroplast, insbesondere Epoxidharz.

Dementsprechend ist ein weiterer Gegenstand der vorliegenden Erfindung ein Polymer enthaltend eine erfindungsgemäße Verbindung. Selbstverständlich können auch mehrere erfindungsgemäße Verbindungen eingesetzt werden.

Darüber hinaus kann das Polymer weitere von den erfindungsgemäßen Verbindungen verschiedene Verbindungen enthalten. Hierbei seien beispielsweise Melamin, Melaminiumphosphat oder Melamincyanurat.

Eine bevorzugte Ausführungsform der vorliegenden Erfindung betrifft daher Polymer zusätzlich enthaltend mindestens eine der Verbindungen ausgewählt aus der Gruppe bestehend aus Melamin, Melaminiumphosphat und Melamincyanurat.

Beispiele für solche synthetische Polymere sind:
1. Polymere von Mono- und Diolefinen, z.B. Polypropylen, Polyisobutylen, Polybuten-1, Poly-4-methylpenten-1, Polyvinylzyklohexan, Polyisopren oder Polybutadien und Polymerisate von Zykloolefinen, z.B. von Zyklopenten oder Norbornen und Polyethylen (auch versetzt), z.B. High Density Polyethylen (HDPE) oder High Molecular Weight (HDPE-HMW), High Density Polyethylen mit Ultra-High Molecular Weight (HDPE-UHMW), Medium Density Polyethylen (MDPE), Low Density Polyethylen (LDPE) und Linear Low Density Polyethylen (LLDPE), (VLDPE) und (ULDPE).
2. Polystyrole, Poly(p-methylstyrol), Poly(α-methylstyrol).
3. Kopolymere sowie Propfkopolymere von Polybutadien-Styrol oder Polybutadien und (Meth)Acrylnitril wie z.B. ABS und MBS.
4. Halogenhaltige Polymere z.B. Polychloropren, Polyvinylchlorid (PVC), Polyvinylidenchlorid (PVDC), Kopolymere von Vinylchlorid/Vinylidenchlorid, Vinylchlorid/Vinylacetat oder Vinylchlorid/Vinylacetat.
5. Poly(meth)acrylate, Polymethylmethacrylate (PMMA), Polyacrylamid und Polyacrylnitril (PAN).
6. Polymere von ungesättigten Alkoholen und Aminen oder ihren Azylderivaten bzw. Azetalen, wie z.B. Polyvinylalkohol (PVA), Polyvinylazetate, -stearate, -benzoate oder maleate, Polyvinylbutyral, Polyallylphthalate und Polyallylmelamine.
7. Homo- und Kopolymere von zyklischen Ethern, wie Polyalkylenglykole, Polyethylenoxide, Polypropylenoxide und deren Kopolymere mit Bisglyzidylethem.
8. Polyazetale, wie Polyoxymethylene (POM) sowie Polyurethan und Acrylat modifizierte Polyazetale
9. Polyphenylenoxide und -sulfide und deren Gemische mit Styrolpolymeren oder Polyamiden
10. Polyamide und Kopolyamide hergeleitet von Diaminen und Dikarbonsäuren und/oder von Aminokarbonsäuren oder den entsprechenden Laktamen, wie z.B. Polyamid 4, Polyamid 6, Polyamid 6/6, 6/10, 6/9, 6/12, 12/12, Polyamid 11, Polyamid 12, aromatische Polyamide hergeleitet vom m-Xylylendiamin und Adipinsäure und Kopolyamide modifiziert mit EPDM oder ABS. Beispiele von Polyamiden und Kopolyamiden sind hergeleitet von ε-Kaprolaktam, Adipinsäure, Sebacinsäure, Dodekansäure, Isophthalsäure, Terephthalsäure, Hexamethylendiamin, Tetramethylendiamin, 2-Methyl-pentamethylendiamin, 2,2,4-Trimethylhexamehthylendiamin, 2,4,4-Trimethylhexamethylendiamin, m-Xylylendiamin oder Bis(3-Methyl-4-aminozyklohexyl)methan.
11. Polyharnstoffe, Polyimide, Polyamidimide, Polyetherimide, Polyesterimide, Polyhydantoine und Polybenzimidazole.
12. Polyester hergeleitet von Dikarbonsäuren und Dialkoholen und/oder Hydroxykarbonsäuren oder den entsprechenden Laktonen, wie z.B. Polyethylenterephthalat, Polypropylenterephthalat, Polybutylenterephthalat, Poly-1,4-dimethylzyklohexanterephthalat, Polyalkylennaphthalat (PAN) und Polyhydroxybenzoate, Polymilchsäureester und Polyglykolsätweester.
13. Polykarbonate und Polyesterkarbonate
14. Polyketone.
15. Mischungen bzw. Legierungen von o.g. Polymeren z.B. PP/EPDM, PA/EPDM oder ABS, PVC/EVA, PVC/ABS, PBC/MBS, PC/ABS, PBTP/ABS, GAS, PC/PBT, PVC/CPE, PVC/Acrylat, POM/thermoplastisches PUR, PC/thermoplastisches PUR, POM/Acrylat, POM/MBS, PPO/HIPS, PPO/PA6.6 und Kopolymere, PA/HDPE, PA/PP, PA/PPO, PBT/PC/ABS oder PBT/PET/PC.
16. Duroplaste wie PF, MF oder UF oder Mischungen davon
17. Epoxidharze - Thermoplaste und Duroplaste
18. Phenoxyharze
19. Wood-Plastic-Composites (WPC)

Die Konzentration des beanspruchten Flammschutzmittels in dem Polymer beträgt vorzugsweise 0,1 bis 60 Gew.-% bezogen auf das zuverarbeitende Polymer.

Das Flammschutzmittel kann z.B. durch Vormischung in Form von Pulver und/oder Granulat in einem Mixer und dann durch Homogenisieren in einer Polymerschmelze durch Kompoundieren (u.a. in einem Doppelschneckenextruder) hergestellt werden. Das Flammschutzmittel kann evtl. auch bei der Verarbeitung direkt zugegeben werden.

Das so flammgeschütze Material kann zu Fasern, Folien, Gußartikeln verarbeitet sowie zur Behandlung von Oberflächen verwendet werden.

Das Flammschutzmittel kann auch zur Oberflächenbehandlung (Imprägnierung) von Fasern, Folien, Textilien oder andere technische Materialien verwendet werden.

Durch Coating von Metalloberflächen kann auch ein antikorrosiver Schutzeffekt erzielt werden.

Die erfindungsgemäßen Polymerzubereitungen können mit weiteren bekannten Synergisten und Co-Komponenten wie Aryl- oder Chloralkylphosphatestem, Arylen-diphosphatestem, Bisphenol-A (F)-diphosphatestem, polymere Arylphosphatestem, Bis-Azinpentaerythritdiphosphat-Salzen, Hexa-aryloxy-triphosphazenen, Poly-aryloxy-phosphazenen und Siloxanen (R₂SiO)ᵣ oder (RSiO_{1,5})ᵣ, insbesondere POSS-Verbindungen (Polyhedral Oligomeric SilSesquioxanes) sowie Metallphosphinaten oder Metallhypophosphiten (Metall: Mg, Ca, Zn und Al) oder den Kohlenstoffbildnern wie Pentaerythrit, Dipentaerythrit und Tripentaerythrit bzw. deren Estern oder Promotoren hierfür ausgerüstet werden,.

Folgende Zusatzstoffe seien weiterhin benannt:
Metallhydroxide, beispielsweise Aluminium- oder Magnesiumhydroxid,
Metallborate, wie beispielsweise Kalzium-, Magnesium-, Mangan- oder Zinkborate. Metalloxide wie Magnesium-, Aluminium-, Mangan-, Zink und Antimonoxid oder Titandioxid, Siliziumdioxid; Metallphosphate wie beispielsweise Magnesium-, Kalzium- , Zink- und Aluminiumphosphat; Tonmineralien wie Kaolinit, Muskovit, Pyrophyllit, Bentonit und Talk oder andere Mineralien wie Wollastonit, Quarz, Glimmer, Feldspat bzw. mineralische Anionenaustauscher wie Hydrotalzite oder andere Magnesium-Aluminium-Hydroxokarbonate oder Kalzium-Aluminium-Hydroxokarbonate enthalten.

Als Schaumbildner seien genannt: Melamin, Melaminformaldehydharze, Melaminzyanurat, Melaminpolyphosphat; Harnstoffderivate wie Harnstoff. Thioharnstoff, Guanamine, Benzoguanamin, Azetoguanamin und Succinylguanamin, Dizyandiamid, Guanidin und Guanidinsulfamat sowie andere Guanidinsalze bzw. Allantoine, Glykolurile und Isozyanursäure-tris-hydroxyethylester.

Die erfindungsgemäßen Polymerzubereitungen können desweiteren Antidripping-Mittel, insbesondere auf Polytetrafluoroethylen-Basis enthalten. Die Konzentration solcher Antidrippingmittel beträgt 0,01 bis 15 Gew.-% bezogen auf das zuverarbeitende Polymer.

Zusätzlich können den Formulierungen weitere Komponenten zugegeben werden, z.B. Füllstoffe und Verstärkungsmittel, wie Glasfasern, Glasperlen oder mineralische Zusätze wie Kreide. Als weitere Additive können Antioxidantien, Lichststabilisatoren, Gleitmittel. Pigmente, Nukleierungsagentien und Antistatika.

### Beispiele

### Beispiel 1 - Vorstufe

Zubereitung von Aluminium-tris-dihydrogenphosphat (Ia): 23,4g (0,3Mol, feucht) Aluminiumhydroxid werden in 88,2g (0,9Mol, 85%ig) Phosphorsäure unter Rühren und Erwärmen gelöst.

### Beispiel 6 - erfindungsgemäß

### Herstellung von Tris-Melaminium-tris-hydrogenphosphato-aluminat (XIIa):

Eine wäßrige Lösung von 318,0g (1,0Mol) **(Ia)** wird auf 378,4g (3,OMol) Melamin **(IIIa)** aufgesprüht. Nach Trocknung ist die Produktausbeute praktisch quant. Fp.: > 300 °C Durch mehrstündiges Tempern bei 230 - 250 °C entsteht Hexamelaminium-trispyrophosphato-dialuminat **(XIIIa),** welches durch weiteres Erhitzen in Poly-Hexamelaminium-bis-pyrophosphato-phosphato-dialuminat **(XIVa)** übergeht.

## Patentansprüche

1. Verbindung der Formel (III-1) oder der Formel **(III-2)**
[(A-H)⁺]ₘ [M^{m+}(HPO₄²⁻)ₘ] **(III-1)**
[(A-H)⁺]m [Mm+(P20₇⁴⁻)_{m/2}] **(III-2)**
wobei
**(A-H)**⁺ ein Rest der Formel **(IV)** 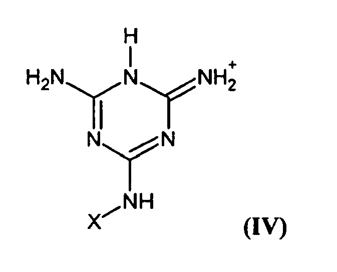 ist, in der **X** H, CN, C(NH)NH₂, C(O)NH₂, C(NH)NHCN ist oder dessen Kondensationsprodukt;
jedes **M** unabhängig voneinander Ca, Mg, Zn oder Al ist;
**m** 2 oder 3 ist.

2. Verbindung nach Anspruch 1, **dadurch gekennzeichnet, dass** M Mg oder Al ist.

3. Verbindung nach Anspruch 1 oder 2, **dadurch gekennzeichnet, dass** X in Formel (IV) H ist.

4. Verbindung der Formel **(III)** nach Anspruch 1 ausgewählt aus der Gruppe bestehend aus
[(Mel-H)⁺]₂ [Mg(HPO₄)₂]²⁻,
[(Mel-H)⁺]₂ [Ca(HPO₄)₂]²⁻,
[(Mel-H)⁺]₂ [Zn(HPO₄)₂]²⁻,
[(Mel-H)⁺]₃ [Al(HPO₄)₃]³⁻,
[(Mel-H)⁺]₂ [MgP₂O₇]²⁻,
[(Mel-H)⁺]₂ [CaP₂O₇]²⁻,
[(Mel-H)⁺]₂ [ZnP₂O₇]²⁻ und
[(Mel-H)⁺]₃ [Al(P₂O₇)_{3/2}]³⁻.

5. Verwendung einer Verbindung nach einem der Ansprüche 1 bis 4 als Flammschutzmittel in einem Polymer.

6. Verwendung nach Anspruch 5, **dadurch gekennzeichnet, dass** das Polymer ein Thermoplast oder Duroplast ist.

7. Verwendung nach Anspruch 6, **dadurch gekennzeichnet, dass** der Thermoplast ein Polyamid, Polyurethan, Polystyrol, Polyolefin oder Polyester und der Duroplast ein Epoxidharz ist.

8. Polymer enthaltend eine Verbindung nach einem der Ansprüche 1 bis 4.

9. Polymer nach Anspruch 8 zusätzlich enthaltend mindestens eine der Verbindungen ausgewählt aus der Gruppe bestehend aus Melamin, Melaminiumphosphat und Melamincyanurat.

## Claims

1. Compound of the formula **(III-1)** or of the formula **(III-2)**
[(A-H]⁺]ₘ [M^{m+}(HPO₄²⁻)ₘ] **(III-1)**
[(A-H)⁺]ₘ [M^{m+}(P₂O₇⁴⁻)_{m/2}] **(III-2)**
where
**(A-H)**⁺ is a radical of the formula **(IV)** 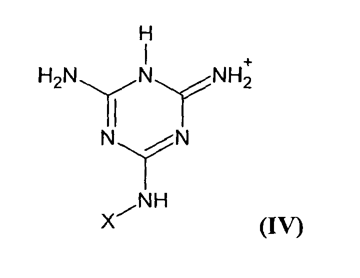 in which X is H, CN, C(NH)NH₂, C(O)NH₂, C(NH)NHCN, or a condensation product thereof;
each **M** is independently Ca, Mg, Zn or Al;
**m** is 2 or 3.

2. Compound according to Claim 1, **characterized in that** M is Mg or Al.

3. Compound according to Claim 1 or 2, **characterized in that** X in formula (IV) is H.

4. Compound of the formula **(III)** according to Claim 1 selected from the group consisting of
[(Mel-H)⁺]₂ [Mg(HPO₄]₂]²⁻,
[(Mel-H)⁺]₂ [Ca(HPO₄)₂]²⁻,
[(Mel-H)⁺)₂ [Zn(HPO₄)₂)²⁻,
[(Mel-H)⁺]₃ [Al(HPO0₄)₃]³⁻,
[(Mel-H)⁺]₂ [MgP₂O₇]²⁻,
[(Mel-H)⁺)₂ [CaP₂O₇]²⁻,
[(Mel-H)⁺]₂ [ZnP_{z}O₇]²⁻ and
[(Mel-H)⁺]₃ [Al(P₂O₇)_{3/2}]³⁻.

5. Use of a compound according to any of Claims 1 to 4 as a flame retardant in a polymer.

6. Use according to Claim 5, **characterized in that** the polymer is a thermoplastic or thermoset.

7. Use according to Claim 6, **characterized in that** the thermoplastic is a polyamide, polyurethane, polystyrene, polyolefin or polyester, and the thermoset is an epoxy resin.

8. Polymer containing a compound according to any of Claims 1 to 4.

9. Polymer according to Claim 8, additionally containing at least one of the compounds selected from the group consisting of melamine, melaminium phosphate and melamine cyanurate.

## Revendications

1. Composé de formule (III-1) ou de formule (III-2)
[(A-H)⁺]ₘ[M^{m+}(HPO₄²⁻] (III-1)
[(A-H)⁺]ₘ[M^{m+}(P₂O₇⁴⁻)_{m/2}] (III-2)
dans lesquelles
(A-H)⁺ est un radical de formule (IV) 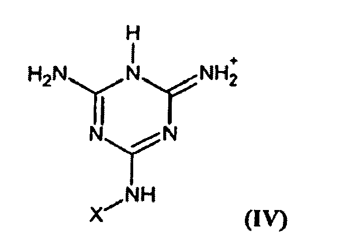 dans laquelle X est H, CN, C(NH)NH₂, C(O)NH₂, C(NH)NHCN, ou son produit de condensation;
chaque M est indépendamment Ca, Mg, Zn ou Al;
m est 2 ou 3.

2. Composé selon la revendication 1, **caractérisé en ce que** M est Mg ou Al.

3. Composé selon la revendication 1 ou 2, **caractérisé en ce que** X dans la formule (IV) est H.

4. Composé de formule (III) selon la revendication 1, choisi dans le groupe constitué par
[(A-H)⁺]₂[Mg(HPO₄)₂]²⁻
[(Mel-H)⁺]₂[Ca(HPO₄)₂]²⁻,
[(Mel-H)⁺]₂[Zn(HPO₄)₂]²⁻,
[(Mel-H)⁺]₃[Al(HPO₄)₃]³⁻,
[(Mel-H)⁺]₂[MgP₂O₇]²⁻,
[(Mel-H)⁺]₂[CaP₂O₇]²⁻,
[(Mel-H)⁺]₂[ZnP₂O₇]²⁻ et
[(Mel-H)⁺]₃[Al(P₂O₇)_{3/2}]³⁻.

5. Utilisation d'un composé selon l'une quelconque des revendications 1 à 4 en tant qu'agent ignifuge dans un polymère.

6. Utilisation selon la revendication 5, **caractérisée en ce que** le polymère est un thermoplaste ou un duroplaste.

7. Utilisation selon la revendication 6, **caractérisée en ce que** le thermoplaste est un polyamide, un polyuréthane, un polystyrène, une polyoléfine ou un polyester et le duroplaste est une résine époxyde.

8. Polymère contenant un composé selon l'une quelconque des revendications 1 à4.

9. Polymère selon la revendication 8, contenant également au moins un des composés choisis dans le groupe constitué par la mélamine, le phosphate de mélaminium et le cyanurate de mélamine.
